Europäisches Patentamt

European Patent Office

Office européen des brevets

(19)

(11) Veröffentlichungsnummer : **0 049 764
B1**

(12) EUROPÄISCHE PATENTSCHRIFT

(45) Veröffentlichungstag der Patentschrift :
20.08.86

(21) Anmeldenummer : 81107126.5

(22) Anmeldetag : 10.09.81

(51) Int. Cl.⁴ : **G 01 D 5/26, G 01 D 5/36,
G 01 D 5/245**

(54) Inkrementale Längen- oder Winkelmesseinrichtung.

(30) Priorität : 07.10.80 DE 3037810

(43) Veröffentlichungstag der Anmeldung :
21.04.82 Patentblatt 82/16

(45) Bekanntmachung des Hinweises auf die Patenterteilung : 20.08.86 Patentblatt 86/34

(84) Benannte Vertragsstaaten :
AT CH FR GB IT LI NL SE

(56) Entgegenhaltungen :
DE-A- 2 540 412
DE-A- 2 948 854
US-A- 4 097 734
IBM TECHNICAL DISCLOSURE BULLETIN, Band 19,
Nr. 8, Januar 1977, Seiten 2872-2873, New York, USA
B.C. DILLON et al.: "Dual-scale travel sensor"
Prospekt der Firma Dr. Johannes Heidenhain GmbH,
Traunreut, "Fertigungsprogramm 1973" und "Numerische Positionsanzeige", Sept. 1977

(73) Patentinhaber : Dr. Johannes Heidenhain GmbH
Nansenstrasse 17
D-8225 Traunreut (DE)

(72) Erfinder : Nelle, Günther, Dr.-Ing.
Eichenweg 12
D-8221 Bergen (DE)

**Beschreibung**

Die Erfindung bezieht sich auf eine inkrementale Längen- oder Winkelmeßeinrichtung mit einem Maßstabskörper, auf dem eine Gitterteilung sowie mehrere, vorgegebenen Gitterteilungspositionen fest zugeordnete Referenzmarken entlang der Gitterteilung angeordnet sind ;

einer relativ zum Maßstabskörper beweglichen Abtasteinrichtung zur Erzeugung von die Relativbewegung der Gitterteilung bzw. der Referenzmarken repräsentierenden elektrischen Abtastimpulse ;

vorgegebenen Referenzmarken zugeordneten Schaltmitteln, deren Bauteile teils an der Abtasteinrichtung angebracht und teils entlang des Maßstabskörpers verschieblich angeordnet sind und die bei geeigneter Positionierung ihrer verschieblichen Bauteile jeweils ein elektrisches Signal erzeugen, wenn eine der vorgegebenen Referenzmarken von der Abtasteinrichtung abgetastet wird ;

einer Koinzidenzschaltung für die die Referenzmarken repräsentierenden Abtastimpulse und das von den Schaltmitteln erzeugte elektrische Signal und

einem von dem Ausgangssignal der Koinzidenzschaltung gesteuerten Zähler für die die Gitterteilung repräsentierenden Abtastimpulse.

Bei einer derartigen Meßeinrichtung können an einer Referenzmarke erzeugte elektrische Impulse auf verschiedene Weise verwertet werden, z. B. zum Reproduzieren der Nullposition im Zähler, zum Anfahren einer bestimmten Position zu Beginn der Messung und zur Kontrolle von Störimpulsen.

Bei bekannten inkrementalen Meßeinrichtungen sind demnach Anzahl und Lage der bei der Maßstabherstellung mitaufgebrachten Referenzmarken entsprechend den Erfordernissen des Benutzers festgelegt. Somit besteht beim späteren Einsatz der Meßeinrichtung keine Möglichkeit mehr, die Anzahl und die Lage der von den Referenzmarken abgeleiteten Impulse zu verändern.

Zur Behebung dieser Nachteile wird in der DE-B-25 40 412 vorgeschlagen, auf dem Maßstab bereits bei der Teilungsherstellung in zueinander festgelegten Abständen eine Reihe von Referenzmarken vorzusehen und mindestens ein Schaltmittel auf dem Maßstab selbst oder in dessen unmittelbarer Nähe anzuordnen ; eine oder mehrere Referenzmarken können ausgewählt und jeweils in Wirkzusammenhang mit dem Schaltmittel gebracht werden. Dabei wird jeder Referenzmarke, die beim Meßvorgang zur Wirkung gelangen soll, ein Magnet zugeordnet, der beim Vorbeibewegen der Abtasteinrichtung einen darauf angebrachten elektrischen Schalter ansteuert, dessen elektrischer Ausgang zusammen mit dem elektrischen Ausgang der Abtasteinrichtung an eine elektronische Baueinheit gelegt ist, die an ihrem Ausgang nur dann einen Steuerimpuls abgibt, wenn gleichzeitig am Ausgang der Abtasteinrichtung und am Ausgang des

Schalters ein elektrisches Signal anliegt. Erfahrungsgemäß neigen elektrische Schalter beim Schaltvorgang zum Prellen, was seinerseits zu Störimpulsen und somit zu Verfälschungen des Meßergebnisses führen kann. Die zur Auswahl der Referenzmarken vorgesehenen Magnete können unter ungünstigen Bedingungen Verunreinigungen wie Späne etc. anziehen, was ebenfalls Störungen des Meßvorganges auslösen kann.

Ferner sind aus der US-A-4 097 734 bereits optische Schaltmittel bekannt, mit denen ein Steuerimpuls für den Zähler eines inkrementalen Meßsystems erzeugt wird, wenn die Gitterteilung dieses Systems eine bestimmte Referenzposition einnimmt. Die optischen Schaltmittel umfassen eine Lichtquelle und eine Photoempfängeranordnung sowie einen Reflektor, der an einer Referenzposition auf dem Maßstabskörper und zusammen mit diesem relativ beweglich bezüglich der Lichtquelle und der Empfängeranordnung angeordnet ist.

Der Erfindung liegt die Aufgabe zugrunde, eine störsichere inkrementale Längen- oder Winkelmeßeinrichtung der eingangs genannten Gattung zu schaffen.

Diese Aufgabe wird erfindungsgemäß durch die kennzeichnenden Merkmale des Anspruchs gelöst.

Die Vorteile der Erfindung liegen im wesentlichen darin, daß lichtelektrische Schaltmittel nicht zum Prellen beim Schalten neigen, so daß aus diesem Grund die Signalverarbeitung der von den Referenzmarken abgeleiteten Impulse vereinfacht wird, und daß aus der Vielzahl von Referenzmarken in einfacher Weise eine oder mehrere ausgewählt und zur Wirkung gebracht werden können.

Mittels der Zeichnungen wird anhand von Ausführungsbeispielen die Erfindung noch näher erläutert.

Es zeigt

Figur 1 schematisch eine inkrementale Längenmeßeinrichtung,

Figur 2 eine ausschnittsweise Untersicht auf Maßverkörperung und Abtasteinrichtung,

Figur 3 einen Schnitt durch die Längenmeßeinrichtung entlang der Linie III/III in Figur 2,

Figur 4 eine weitere ausschnittsweise Unteransicht auf Maßverkörperung und Abtasteinrichtung.

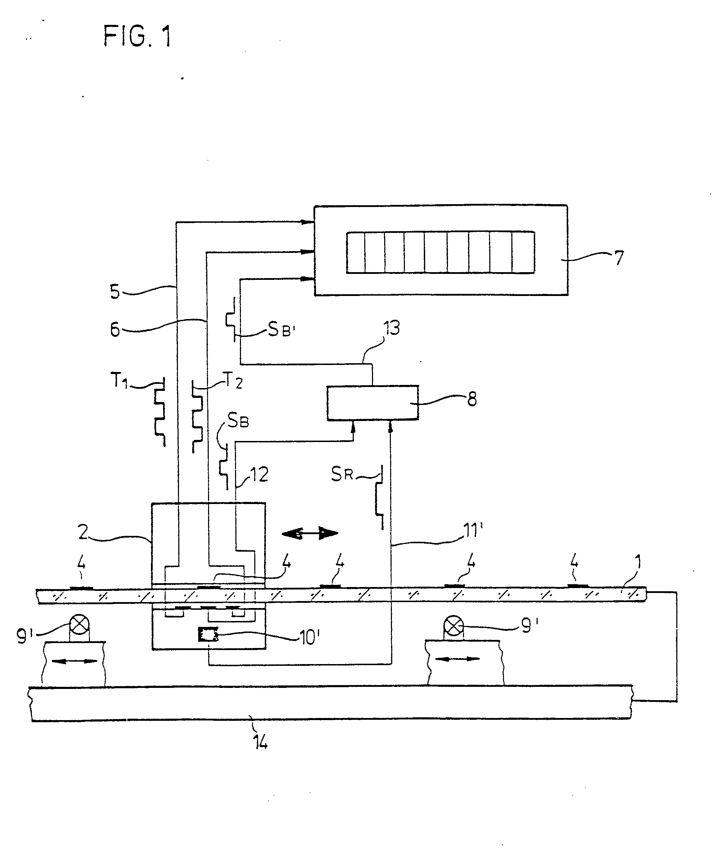

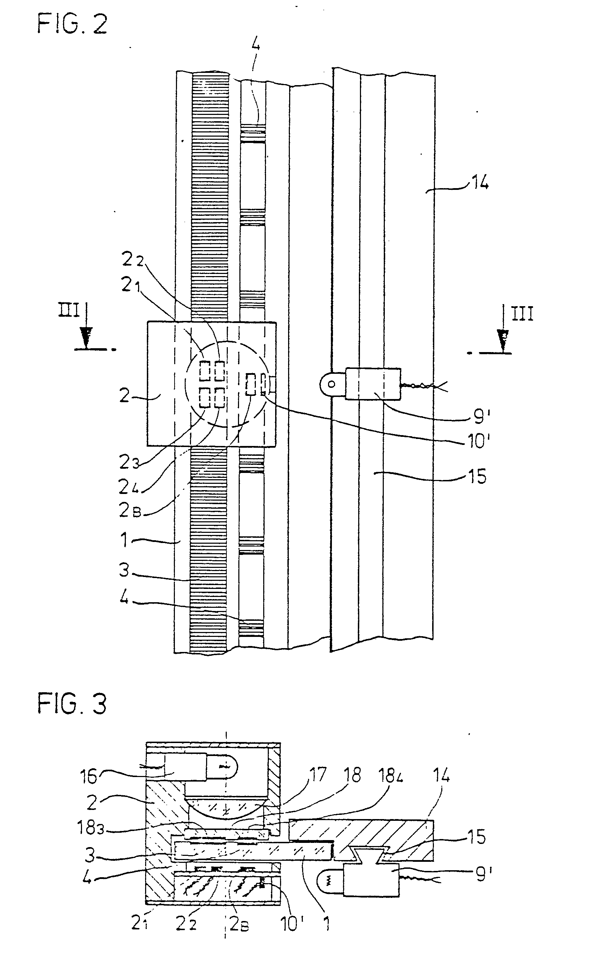

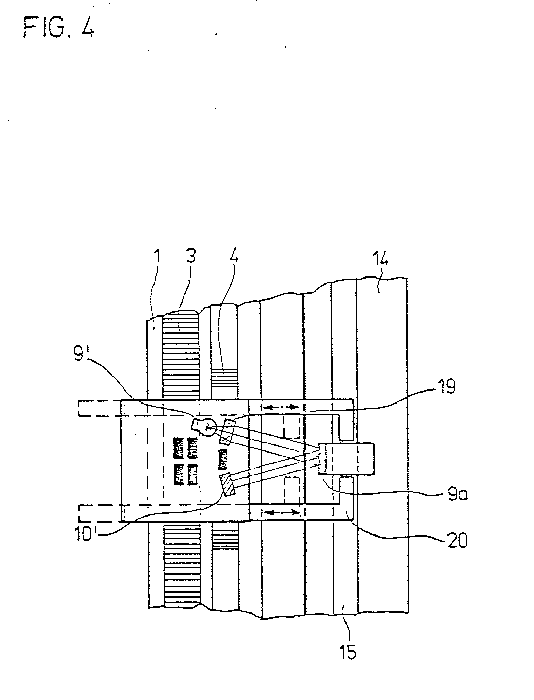

In Figur 1 ist schematisch eine lichtelektrische inkrementale Längenmeßeinrichtung gezeigt, die unter anderem aus einem Glasmaßstab 1 als Maßverkörperung, einer Abtasteinrichtung 2 und einem elektronischen Zähler 7 besteht. Am Maßstab 1 ist als Teilung ein Strichgitter 3 (Figur 2 und Figur 4) aufgebracht, das im Durchlicht fotoelektrisch berührungsfrei abgetastet wird. Entlang der Teilung 3 ist am Maßstab 1 eine Reihe von Referenzmarken 4 aufgebracht, die jeweils aus Strichgruppen mit einer bestimmten Strichverteilung bestehen. Die durch Abtastung des Strichgitters 3 erzeugten periodischen Abtastsignale, die in der Abtasteinrichtung 2 verstärkt und in Rechtecksignale $T_1$ und $T_2$ umgeformt werden, steuern über elektrische Leitungen 5 und 6 den elektronischen Zähler 7. Aufgrund eines bestimmten Phasenversatzes der Abtastsignale $T_1$, $T_2$ kann der Zähler 7 die Bewegungsrichtung der Abtasteinrichtung 2 erkennen und die Position der Abtasteinrichtung 2 in Bezug auf die Maßverkörperung 1 in Ziffernform anzeigen. Das an den Referenzmarken 4 erzeugte Signal wird in der Abtasteinheit 2 verstärkt und in ein Rechtecksignal $S_B$ umgeformt. Derartige Nullimpulssignale können beispielsweise bei ihrem Auftreten dazu dienen, den elektronischen Zähler 7 auf den Zahlenwert « Null » zu stellen. Derartige Meßeinrichtungen sind bekannt und beschrieben z. B. in Firmendruckschriften der Dr. Johannes Heidenhain GmbH, Traunreut : « Fertigungsprogramm 1973, Seiten 20-25 bzw». « Numerische Positionsanzeige, September 1977, Seite 2 ».

Das von einer Referenzmarke 4 abgeleitete Signal $S_B$ wird über eine Steuerleitung 12 einer elektronischen Baueinheit 8 zugeführt. Die Abtasteinrichtung 2 enthält ein Fotoelement 10', dessen Ausgang über eine Steuerleitung 11' mit der elektronischen Baueinheit 8 verbunden ist. Entlang der Meßteilung 3 verschiebbare Beleuchtungseinrichtungen 9' (Glühlampe, LED) können jeweils den gewünschten Referenzmarken 4 zugeordnet werden.

Wenn die Abtasteinrichtung 2 entlang der Meßteilung 3 verschoben wird, und dabei das Fotoelement 10' in den Strahlengang einer Beleuchtungseinrichtung 9' gelangt, wird ein elektrisches Signal $S_R$ erzeugt und in die elektronische Baueinheit 8 eingespeist. Liegt dort gleichzeitig ein elektrisches Signal $S_B$ — abgeleitet von einer Referenzmarke 4 — an, so wird aus der Baueinheit 8 ein Impuls $S_B'$ über eine Steuerleitung 13 auf einen Eingang am elektronischen Zähler 7 geschaltet, der dadurch zum Beispiel auf den Zahlenwert « Null » gesetzt wird. Selbstverständlich lassen sich auch andere Vorgänge mit einem derartigen Impuls steuern.

In Figur 2 ist ausschnittsweise die Untersicht einer Maßverkörperung 1 nebst Abtasteinrichtung 2 und eines Maßstabträgerkörpers 14 gezeigt. In der Abtasteinrichtung 2 sind die Abtastelemente $2_1$, $2_2$, $2_3$ und $2_4$ für die Abtastung der Gitterteilung 3 zu erkennen. Die zugehörigen elektrischen Kabelverbindungen zum Zähler 7 sind der zeichnerischen Klarheit wegen nicht dargestellt. Ein fünftes Abtastelement $2_B$ dient zur Abtastung der Spur auf der die Referenzmarken 4 angeordnet sind. Bei Relativbewegungen von Maßverkörperung 1 und Abtasteinrichtung 2 in Richtung des Teilungsverlaufes werden in bekannter Weise Abtastsignale erzeugt. Die Referenzmarkenspur wird dabei von dem Abtastelement $2_B$ abgetastet. Eine Beleuchtungseinrichtung 9' ist parallel zur Meßteilung 1 in einer Nut 15 — die im Maßstabträgerkörper 14 eingebracht ist — entlang der Referenzmarkenspur $4_S$ verschiebbar angeordnet. Auf diese Weise kann die Beleuchtungseinrichtung 9' (auch als Lichtsender zu bezeichnen) mit jeder der Referenzmarken 4 in Koinzidenz gebracht werden. Im Bedarfsfalle kann auch jeder auszuwählenden Referenzmarke 4 ein Lichtsender 9' zugeordnet werden.

Es liegt im Rahmen der Erfindung, eine Auswahl einer oder mehrerer Referenzmarken 4 aus der Reihe der Referenzmarken 4 dadurch zu treffen, daß alle Referenzmarken 4 beleuchtet werden, außer denjenigen, die zur Auswertung ausgewählt werden. In diesem Falle müßte das Signal $S_R$ vom Fotoelement 10' mit negativem Potential an die elektronische Baueinheit 8 angelegt werden, wenn vorausgesetzt wird, daß bisher die Signale mit positivem Potential vorgelegen haben. Eine derartige Maßnahme liegt bei Kenntnis der Erfindung im Können des Durchschnittsfachmannes.

Figur 3 zeigt einen Schnitt entlang der Linie III/III der Meßeinrichtung gemäß Figur 2. Außer den bereits beschriebenen Elementen ist die Beleuchtungseinrichtung für die Abtastung der Maßverkörperung 1 zu erkennen. Eine Miniaturlampe 16 beleuchtet durch einen Kondensor 17 die Maßverkörperung 1. Zwischen Maßstab 1 und Kondensor 17 ist eine Abtastplatte 18 angeordnet, auf der in bekannter Weise Gegengitter $18_3$ und $18_4$ angebracht sind (vergleiche Fertigungsprogramm 1973, Seiten 22, 23 der Fa. Dr. Johannes Heidenhain GmbH, Traunreut). Die Lampe 9' ist in der Nut 15 entlang der Teilung 3 verschiebbar angeordnet.

In der Figur 4 ist eine ähnliche Anordnung gezeigt, wie in Figur 2, jedoch wird hier ein reflektierendes Element 9a entlang der Teilung so verschoben, daß es jeweils mit der ausgewählten Referenzmarke 4 koinzidiert. Die Lampe 9' und das Abtastelement 10' sind beide in der Abtasteinrichtung 2 angeordnet und so justiert, daß der Beleuchtungsstrahlengang von der Lampe 9' durch eine Beleuchtungsoptik 19 auf den Spiegel 9a trifft, reflektiert wird und von dort aus auf das Abtastelement 10' fällt, dessen Ausgang in der vorbeschriebenen Weise mit der elektronischen Baueinheit 8 gemäß Figur 1 verbunden ist.

Die Verschiebung des reflektierenden Elementes 9a kann ferngesteuert erfolgen, indem an der Abtasteinrichtung 2 bewegliche Mitnehmer 20 angebracht sind. Diese Mitnehmer 20 sind beispielsweise elektromagnetisch oder pneumatisch ausfahrbar, so daß im ausgefahrenen Zustand das reflektierende Element 9a entlang der Meßteilung 3 über beliebig viele Referenzmarken hinweg von der Abtasteinrichtung 2 mitgenommen wird. Sind die Mitnehmer 20 eingefahren, wird das reflektierende Element 9a nicht von der Abtasteinrichtung mitgenommen, kann aber manuell verschoben werden.

**Patentanspruch**

Inkrementale Längen- oder Winkelmeßeinrich-

tung mit einem Mabstabskörper (1), auf dem eine Gitterteilung (3) sowie mehrere, vorgegebenen Gitterteilungspositionen fest zugeordnete Referenzmarken (4) entlang der Gitterteilung (3) angeordnet sind ;

einer relativ zum Maßstabskörper (1) beweglichen Abtasteinrichtung (2) zur Erzeugung von die Relativbewegung der Gitterteilung (3) bzw. der Referenzmarken (4) repräsentierenden elektrischen Abtastimpulsen (T1, T2 bzw. SB) ;

vorgegebenen Referenzmarken (4) zugeordneten Schaltmitteln (9', 10'), deren Bauteile teils an der Abtasteinrichtung (2) angebracht und teils entlang des Maßstabskörpers (1) verschieblich angeordnet sind und die bei geeigneter Positionierung ihrer verschieblichen Bauteile jeweils ein elektrisches Signal (SR) erzeugen, wenn eine der vorgegebenen Referenzmarken (4) von der Abtasteinrichtung (2) abgetastet wird ;

einer Koinzidenzschaltung (8) für die die Referenzmarken (4) repräsentierenden Abtastimpulse (SB) und das von den Schaltmitteln (9', 10') erzeugte elektrische Signal (SR) und

einem von dem Ausgangssignal (SB') der Koinzidenzschaltung (8) gesteuerten Zähler (7) für die die Gitterteilung (3) repräsentierenden Abtastimpulse (T1, T2), dadurch gekennzeichnet, daß

die Schaltmittel jeweils aus einer einen Sender (9') und einen Empfänger (10') umfassenden Lichtschranke bestehen und das entlang des Maßstabskörpers (1) verschieblich angeordnete Bauteil jeweils von einem für den Strahlengang maßgeblichen optischen Element (9', 9a) der Lichtschranke gebildet ist,

Mittel zur Verschiebung der optischen Elemente (9', 9a) vorgesehen sind, welche an der Abtasteinrichtung (2) angebrachte, durch Fernsteuerung betätigte Mitnehmer (20) enthalten.

## Claim

Incremental length-measuring or angle-measuring device comprising a scale body (1) on which a grid division (3) and several reference marks (4), permanently allocated to predetermined grid division positions, are arranged along the grid division (3) ;

with a scanning device (2), which can be moved relative to the scale body (1), for generating electric scanning pulses (T1, T2 and SB) representing the relative movement of the grid division (3) or of the reference marks (4) ;

switching means (9', 10') which are allocated to predetermined reference marks (4) and the components of which are partially mounted at the scanning device (2) and are partially arranged to be displaceable along the scale body (1) and which, with suitable positioning of their displaceable components, generate an electric signal (SR) in each case when one of the predetermined reference marks (4) is scanned by the scanning device (2) ;

a coincidence circuit (8) for the scanning pulses (SB) representing the reference marks (4) and the electric signal (SR) generated by the switching means (9', 10'), and

a counter (7) controlled by the output signal (SB') of the coincidence circuit (8), for the sampling pulses (T1, T2) representing the grid division (3),

characterized in that

the switching means consist in each case of a light barrier comprising a transmitter (9') and a receiver (10') and the component arranged to be displaceable along the scale body (1) is in each case formed by an optical element (9', 9a) of the light barrier determining for the radiation path,

means are provided for displacing the optical elements (9', 9a) which means contain drivers (20) which are attached to the scanning device (2) and are actuated by remote control.

## Revendication

Dispositif de mesure incrémentale, de longueurs ou d'angles, avec un corps d'échelle de mesure (1) sur lequel sont disposés une graduation périodique (3) ainsi que plusieurs repères (4) prévus le long de la graduation périodique (3) et affectés de manière fixe à des positions prédéterminées de cette dernière ;

avec un dispositif de balayage (2) mobile par rapport au corps d'échelle de mesure (1) et destiné à produire des impulsions électriques de balayage (T1, T2 ou SB) représentant le déplacement relatif de la graduation périodique (3) ou des repères (4) ;

avec des moyens de commutation (9', 10') affectés à des repères (4) prédéterminés et dont les éléments constitutifs sont pour une part apposés sur le dispositif de balayage (2) et pour une part disposés de manière déplaçable le long du corps d'échelle de mesure (1), et qui, par un positionnement adéquat de leurs éléments déplaçables, produisent respectivement un signal électrique (SR) lorsqu'un des repères prédéterminés (4) est balayé par le dispositif de balayage (2) ;

avec un circuit ET (8) pour les impulsions de balayage (SB) représentant les repères (4) et pour le signal électrique (SR) produit par les moyens de commutation (9', 10'), et

avec un compteur (7) des impulsions de balayage (T1, T2) représentant la graduation périodique (3), asservi par le signal de sortie (SB') du circuit ET (8),

caractérisé par le fait que :

les moyens de commutation sont constitués chacun d'un barrage photoélectrique comprenant un émetteur (9') et un récepteur (10'), et l'élément disposé de manière déplaçable le long du corps d'échelle de mesure (1) est formé par un élément optique (9', 9a) du barrage photoélectrique qui est déterminant pour la marche des rayons,

il est prévu des moyens pour déplacer les éléments optiques (9', 9a), moyens qui comprennent des entraîneurs (20) actionnés par commande à distance et apposés sur le dispositif de balayage (2).

FIG. 1

FIG. 2

FIG. 3

FIG. 4